Europäisches Patentamt

European Patent Office

Office européen des brevets

(19)

(11) Numéro de publication: **0 019 538**

**A1**

(12)

# DEMANDE DE BREVET EUROPEEN

(21) Numéro de dépôt: 80400654.2

(22) Date de dépôt: 12.05.80

(51) Int. Cl.³: **B 01 D 21/00**
**B 30 B 9/18**

(30) Priorité: 14.05.79 FR 7912189

(43) Date de publication de la demande:
26.11.80 Bulletin 80/24

(84) Etats Contractants Désignés:
AT BE CH DE FR GB IT LI NL SE

(71) Demandeur: ALSTHOM-ATLANTIQUE Société anonyme dite:
38, Avenue Kléber
F-75784 Paris Cedex 16(FR)

(72) Inventeur: Ghaleb, Khalil
62, avenue du Vercors
F-38170 Seyssinet(FR)

(74) Mandataire: Weinmiller, Jürgen et al,
Zeppelinstrasse 63
D-8000 München 80(DE)

(54) Décanteur épaississeur de boue.

(57) L'invention est relative à un décanteur épaississeur de boue comprenant une chambre de compactage de la boue à l'aide d'une vis hálicoïdale refoulant la boue compactée au travers d'un orifice muni d'un diaphragme réglable.

Le décanteur est caractérisé en ce que la vis comporte à son extrémité un nez axial (4) disposé au travers de l'orifice d'evacuation (6) et coopérant avec le diaphragme (5) pour obturer ledit orifice en l'absence de boue.

L'invention s'applique au traitement des boues fluides chargées ou non de matières fibreuses.

EP 0 019 538 A1

./...

Croydon Printing Company Ltd.

## FIG.1

## Décanteur épaississeur de boue

L'invention est relative à un décanteur épaississeur de boue et plus particulièrement à un appareil du type comportant une chambre de compactage. On entend par "boue" un liquide chargé de matières en suspension, dont la charge totale excède 1 gramme par litre.

Un tel appareil a été notamment décrit dans le brevet français n° 2.321.456. La chambre de compactage comporte une vis d'Archimède assurant le compactage de la boue qui est refoulée à l'extérieur à travers un orifice tronconique. Pour assurer une certaine régulation de l'évacuation de la boue refoulée, on a proposé de disposer sur l'orifice de sortie un diaphragme souple constitué alors par une bague conique en caoutchouc. Mais cette disposition n'apporte qu'une solution fragmentaire aux problèmes inhérent à l'exploitation du décanteur. En effet, un tel diaphragme n'assure pas l'étanchéité de l'appareil à sa mise en service, lorsqu'il ne s'est pas encore formé à travers l'orifice de sortie un bouchon de boue compactée. Il ne l'assure pas davantage à l'arrêt de l'appareil ou encore si le débit solide vient à diminuer.

L'invention a pour but de munir l'orifice de sortie de la chambre de compactage du décanteur d'un diaphragme permettant d'assurer à la fois une régulation automatique de la contre-pression engendrée par le débit d'évacuation de la boue compactée par l'appareil, ainsi que l'étanchéité de cet orifice lors du remplissage à l'arrêt ou de l'interruption du débit solide.

L'invention a pour objet un décanteur épaississeur de boue comprenant une chambre de compactage de la boue à l'aide d'une vis hélicoïdale refoulant la boue compactée au travers d'un orifice muni d'un diaphragme automatiquement réglable, caractérisé en ce que la vis comporte à son extrémité un nez axial disposé au travers de l'orifice d'évacuation et coopérant avec le diaphragme pour obturer ledit orifice en l'absence de boue, l'orifice d'évacuation étant constitué par l'espace formé entre le nez et ledit diaphragme.

Selon un mode de réalisation, le diaphragme est fixé sur l'extrémité de la chambre de compactage. Le diaphragme est constitué par un empilage de rondelles élastiques concentriques au nez, de diamètres intérieurs croissants de l'intérieur de la chambre de compactage vers l'extérieur, la première rondelle ayant un diamètre intérieur inférieur à celui du nez qu'elle enserre en l'absence de boue.

En variante, le diaphragme est constitué par une rondelle élastique ayant un diamètre au plus égal à celui du nez qu'elle enserre en l'absence de boue, l'épaisseur de la rondelle décroissant au droit de son diamètre intérieur de sa face en regard de la chambre de compactage vers sa face extérieure.

Selon une autre variante, le diaphragme est constitué par un anneau gonflable enserrant le nez en l'absence de boue. Selon d'autres variantes, le diaphragme peut être constitué par une rondelle élastique enserrant le nez en l'absence de boue et maintenue sur sa face extérieure à la chambre de compactage par une rondelle rigide présentant sur son diamètre intérieur des pattes de renfort, ou encore par une rondelle formée par un ressort métallique enroulé en spirale.

Les caractéristiques et avantages de l'invention apparaîtront dans la description de divers modes de réalisation donnés à titre d'exemples et illustrés dans les dessins.

La figure 1 est une vue en coupe partielle d'un décanteur épaississeur selon l'invention.

La figure 2 est une vue en coupe de l'extrémité de la chambre de compactage montrant un premier mode de réalisation de l'invention.

Les figures 3, 4, 5 et 7 sont des vues analogues à celle de la figure 2 montrant des variantes de réalisation.

Les figures 6 et 8 sont des vues en bout respectivement des figures 5 et 7.

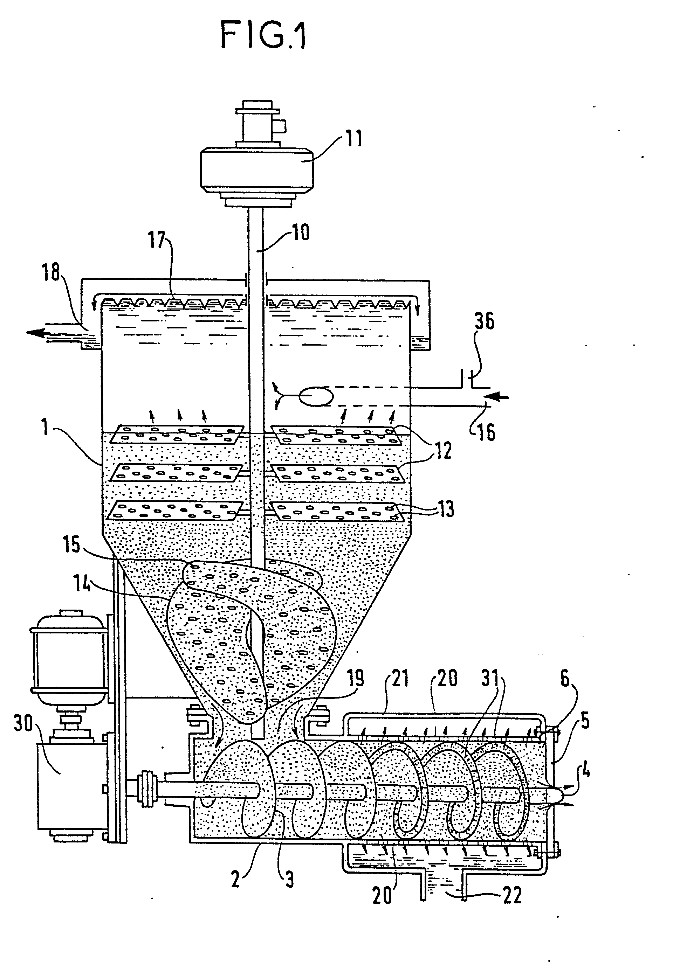

Dans la figure 1, on a désigné par 1 la cuve d'un décanteur épaississeur de boue de forme cylindrique et dont la partie inférieure est conique. La cuve comporte un arbre vertical 10 entraîné à son extrémité supérieure par un moto-réducteur 11. L'arbre 10 est muni dans la partie centrale du décanteur de pales 12 présentant des perforations 13 et à son extrémité inférieure une vis conique 14 de compression préalable, présentant elle-même des perforations 15. La cuve 1 comporte au dessus des pales 12 une tubulure d'admission tangentielle 16 de la boue avec un orifice 36 d'injection de floculants, et à sa partie supérieure un déversoir 17 dans une goulotte de récupération 18.

L'extrémité de la partie conique de la cuve se termine par un orifice 19 d'entrée latérale dans une chambre de compactage final 2 de forme cylindrique.

La chambre de compactage 2 est équipée d'une vis hélicoïdale sans fin 3 entraînée par un moto-réducteur 30. Elle comporte sur son extrémité opposée à l'orifice 19 une grille d'essorage 20 disposée à l'intérieur d'une enveloppe 21 munie d'une goulotte d'évacuation 22. L'extrémité de la vis 3 en regard de la grille 20 comporte des racleurs souples 31 destinés au nettoyage de la grille.

Selon l'invention la vis 3 comporte sur son extrémité libre un nez 4 coopérant avec un diaphragme réglable 5. Le nez, qui est de révolution, est disposé au travers de l'orifice d'évacuation 6 de la boue, constituant l'extrémité de la chambre de compactage 2.

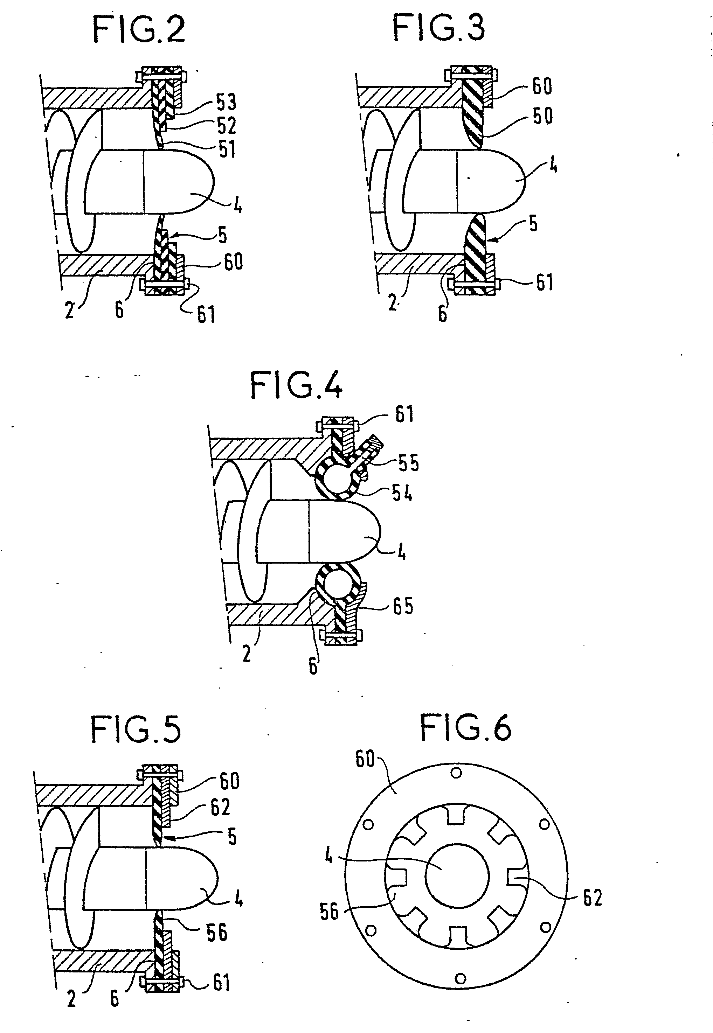

Les figures 2 à 8 montrent différentes variantes d'un premier mode de réalisation du diaphragme dans lequel le diaphragme 5 est assujetti à l'orifice 6 d'extrémité de la chambre de compactage 2.

Dans la figure 2, le diaphragme 5 est constitué par un empilage de rondelles élastiques 51, 52, 53 pressées contre l'orifice 6 par une rondelle métallique 60, l'ensemble étant assujetti sur l'extrémité de la chambre de compactage 2 par des boulons 61.

La rondelle 51 disposée en regard de l'extrémité de la chambre de compactage 2 a un diamètre intérieur légèrement inférieur à celui du nez 4, tandis que les rondelles adjacentes 52 et 53 ont un diamètre croissant vers l'extérieur de la chambre de compactage.

Le fonctionnement du décanteur épaississeur est alors le suivant. La boue est introduite dans la cuve 1 par la tubulure 16 en addition avec des floculants injectés à travers l'orifice 36. Cette boue remplit la cuve 1 jusqu'à hauteur du déversoir 17, ainsi que la chambre de compactage 2. Ce remplissage s'effectue sans difficulté car le diaphragme obture de manière étanche l'orifice 6, la pression hydrostatique ne déformant guère la rondelle élastique 51 qui enserre le nez 4 de la vis 3.

Après remplissage, on met en route d'abord le moto-réducteur 11, ce qui a pour effet d'assurer la décantation de la boue qui converge vers l'orifice 19 en ayant subi un compactage préalable par la vis conique 14. L'alimentation de la cuve se poursuivant, le liquide

- 4 -

d'imprégnation de la boue est déversé à la partie supérieure sur le déversoir 17 pour être recueilli dans la goulotte d'évacuation 18.

La mise en service du moto-réducteur 30 engendre alors un compactage de la boue ayant pénétré dans la cuve 2 au travers de l'orifice 19. Cette boue compactée est essorée au travers de la grille 20 et s'accumule sous forme de bouchon devant le diaphragme 6 qui est repoussé vers la droite, les rondelles élastiques fléchissant. Le diaphragme, ainsi repoussé sous l'effet de la pression de compactage de la vis 3, autorise le passage et l'éjection de la boue compactée dans un espace qui se forme entre le nez 4 et la rondelle 51. Pour un matériau donné, le réglage de la contre-pression offerte par le diaphragme lors de l'éjection s'obtient en jouant sur le nombre de rondelles empilées ainsi que sur la progression des diamètres intérieurs.

Si le débit de la boue injectée vient à diminuer ou à être interrompu, la contre-pression offerte par le diaphragme 5 maintient l'étanchéité de la chambre de compactage 2 et par suite celle de la cuve 1.

Dans la variante de la figure 3, le diaphragme 5 est constitué par une rondelle élastique unique 50 de plus forte épaisseur, mais son diamètre intérieur est profilé de manière à être décroissant depuis la face en regard de l'orifice 6 à sa face extérieure où il se trouve légèrement inférieur à celui du nez 4.

Dans la variante de la figure 4 le diaphragme 5 est constitué par une rondelle gonflable 54 comportant un orifice de gonflage 55 et une rondelle extérieure de maintien 65. Le gonflage de la rondelle est alors réglé pour assurer l'étanchéité de la cuve au démarrage et une contre-pression convenable lors de l'éjection pour le matériau traité.

Dans la variante des figures 5 et 6, on a une rondelle élastique unique 56. Mais on a interposé entre la rondelle 60 et la rondelle 56 une autre rondelle métallique 62 dont le diamètre intérieur est crénelé en comportant des pattes de renforcement 62'.

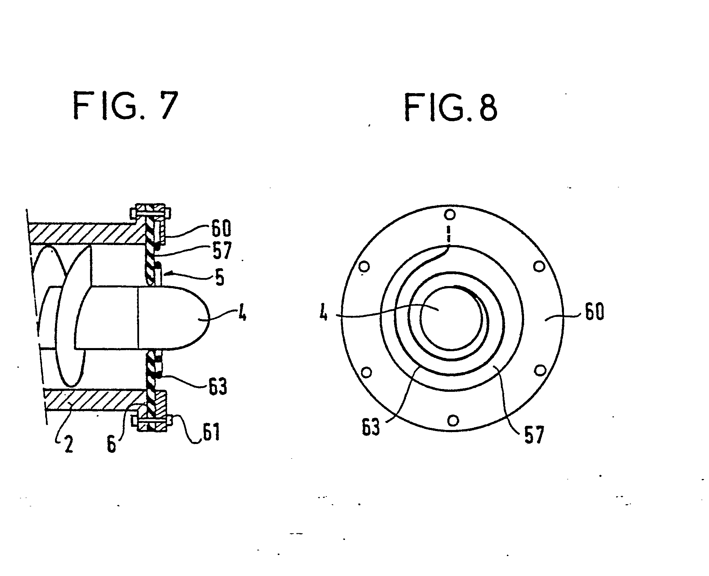

Dans la variante des figures 7 et 8, on a également une rondelle élastique unique 57. Mais on a interposé entre la rondelle 60 et la rondelle 57 un ressort de contre-pression 63 en forme de spirale.

Les diaphragmes, qui viennent d'être décrits et représentés, s'appliquent aussi bien au traitement des boues, qu'elles soient ou non chargées de matières fibreuses.

Il est évident que l'invention n'est nullement limitée aux modes de réalisation qui viennent d'être décrits et représentés et qui n'ont été donnés qu'à titre d'exemples ; en particulier, on peut, sans sortir du cadre de l'invention, modifier certaines dispositions, remplacer certains moyens par des moyens équivalents, ou encore remplacer certains éléments par d'autres susceptibles d'assurer la même fonction technique ou une fonction technique équivalente.

REVENDICATIONS

1/ Décanteur épaississeur de boue comprenant une chambre de compactage de la boue à l'aide d'une vis hélicoïdale refoulant la boue compactée au travers d'un orifice muni d'un diaphragme automatiquement réglable, caractérisé en ce que la vis comporte à son extrémité un nez axial (4) disposé au travers de l'orifice d'évacuation (6) et coopérant avec le diaphragme (5) pour obturer ledit orifice en l'absence de boue, l'orifice d'évacuation étant constitué par l'espace formé entre le nez et ledit diaphragme.

2/ Décanteur selon la revendication 1, caractérisé en ce que le diaphragme (5) est fixé sur l'extrémité (6) de la chambre de compactage (14).

3/ Décanteur selon la revendication 2, caractérisé en ce que le diaphragme est constitué par un empilage de rondelles élastiques (51, 52, 53) concentriques au nez (4) de diamètres intérieurs croissants de l'intérieur de la chambre de compactage vers l'extérieur, la première rondelle (51) ayant un diamètre intérieur inférieur à celui du nez qu'elle enserre en l'absence de boue.

4/ Décanteur selon la revendication 2, caractérisé en ce que le diaphragme est constitué par une rondelle élastique (50) ayant un diamètre intérieur au plus égal à celui du nez (4) qu'elle enserre en l'absence de boue, l'épaisseur de la rondelle décroissant au droit de son diamètre intérieur de sa face en regard de la chambre de compactage vers sa face extérieure.

5/ Décanteur selon la revendication 2, caractérisé en ce que le diaphragme est constitué par un anneau gonflable (54) enserrant le nez (4) en l'absence de boue.

6/ Décanteur selon la revendication 2, caractérisé en ce que le diaphragme est constitué par une rondelle élastique (56) enserrant le nez (4) en l'absence de boue et maintenue sur sa face extérieure à la chambre de compactage par une rondelle rigide (62) présentant sur son diamètre intérieur des pattes (62') de renfort.

7/ Décanteur selon la revendication 2, caractérisé en ce que le diaphragme est constitué par une rondelle élastique (57) enserrant le nez (4) en l'absence de boue et maintenue sur sa face extérieure par une rondelle formée par un ressort métallique (63) enroulé en spirale.

# FIG.1

FIG.2

FIG.3

FIG.4

FIG.5

FIG.6

FIG. 7

FIG. 8

60
57
5
4
63
2 6 61

4
60
63 57

0019538

## DOCUMENTS CONSIDERES COMME PERTINENTS

| Catégorie | Citation du document avec indication, en cas de besoin, des parties pertinentes | Revendication concernée |
|---|---|---|
| | FR - A - 1 401 378 (MERCIER,E; SANCHEZ,I) <br> * Résumé: $1^o$,$2^o$; point c; page 1, colonne de gauche, lignes 10-20, lignes 24-27; page 2, colonne de droite, ligne 56 à page 3, colonne de gauche, ligne 2 * <br> -- | 1,2 |
| | FR - A - 845 493 (AUCLAIR, H.A.) <br> * Résumé: $1^o$,$2^o$; page 1, colonne de gauche, ligne 27 à colonne de droite, ligne 48; page 2, colonne de droite, ligne 97 à page 3, colonne de gauche, ligne 3; page 3, colonne de gauche, lignes 35-40 * <br> -- | 1,2,7 |
| A | FR - A - 2 197 803 (ZYKLOS METALL-BAU KG. DIPL. ING. KARL HAGELE) | |
| DA | FR - A - 2 321 456 (SOC. GEN. DE CONSTRUCTIONS ELECTR. ET MECAN. ALSTHOM) | |
| A | FR - A - 365 686 (MASCHINENFABRIK & EISENGIESSEREI) | |
| A | US - A - 1 624 385 (BERGEN,H.E.) | |
| A | BE - A - 666 486 (ADOLF ZIMMERMANN MASCHINENBAU) | |
| A | FR - A - 2 207 872 (SOC. GENOBLOISE D'ETUDES ET D'APPL. HYDRAULIQUES-SOGREAH) | |
| A | FR - A - 2 138 968 (FRIED. KRUPP GmbH.) <br> ---- | |

**CLASSEMENT DE LA DEMANDE (Int. Cl. ³)**

B 01 D 21/00
B 30 B 9/18

**DOMAINES TECHNIQUES RECHERCHES (Int. Cl. ³)**

B 01 D 21/00
         21/06
         21/14
         21/24
B 65 G 33/22
B 30 B 9/18

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 29-07-1980 | CECCHINI |

OEB Form 1503.1 06.78